Europäisches Patentamt

European Patent Office

Office européen des brevets

(19)

(11) Publication number: **0 093 216
B1**

# EUROPEAN PATENT SPECIFICATION

(12)

(45) Date of publication of patent specification: **19.02.86**

(51) Int. Cl.⁴: **A 01 J 5/04**

(21) Application number: **82302293.4**

(22) Date of filing: **05.05.82**

(54) Improvements in or relating to methods of and/or apparatus for milking animals.

(43) Date of publication of application:
**09.11.83 Bulletin 83/45**

(45) Publication of the grant of the patent:
**19.02.86 Bulletin 86/08**

(84) Designated Contracting States:
**DE FR GB IT SE**

(56) References cited:
**EP-A-0 031 246
US-A-2 718 208
US-A-3 762 371
US-A-4 253 419**

(73) Proprietor: **AHI OPERATIONS LIMITED
640 Great South Road
Manukau City Auckland (NZ)**

(72) Inventor: **Millar, Thomas Douglas
c/o AHI Plastic Moulding Co. Te Rapa Road
Hamilton (NZ)**

(74) Representative: **Bayliss, Geoffrey Cyril et al
BOULT, WADE & TENNANT 27 Furnival Street
London EC4A 1PQ (GB)**

## Description

This invention relates to methods of and/or apparatus for milking animals.

In the milking of lactating animals (cows) it is usual to provide a connecting unit usually and herein referred to as a claw to join each of the four teat cups together, to collect the milk from each teat cup and to provide a central connection point through which vacuum and air pulsation may be applied to the teat cup.

It is well known that under adverse milking conditions, such as when a teat cup slips off a teat or some other event occurs which occasions a large air leak at a teat cup, and even sometimes during normal milking, milk or particles of milk may travel from one teat to another (or the others), or when the claw is handled or suspended between milkings, milk may flow back to the claw from the system piping or from claw to one or more of the teat cups.

If this milk is contaminated or carries infection from an infected teat or quarter, the infected milk may cause further infections in other quarters of the same cow, or in cows subsequently milked with the same milking cluster.

With a milking claw of current or standard design, there is no provision to prevent back flow of milk and/or air so that when a teat becomes dislodged, air at atmospheric pressure will fill that claw. The claw is then at a higher (or more positive) pressure than the residual vacuum level remaining in the teat cups around the teat ends so milk particles may be forced to travel back towards those teat ends. It has been widely accepted that this is one of the most dangerously effective mechanisms for transmitting or transferring infected or bacteria laden milk from one teat to another or from a previously milked cow to the cow currently being milked.

U.S.—A—4,253,419 discloses a milking apparatus including a milk collecting chamber having a central vertical axis and four inlet nozzles the remote ends of which are connected to teat cups. The nozzles slant downwardly to the upper side of the chamber and extend tangentially in one direction relative to the chamber axis to cause milk from the nozzles to spin as it descends in a spiral path into the chamber from each of the nozzles. A discharge nozzle is provided in the lower part of the chamber. No specific provision is made to prevent reverse flow of milk from the chamber through any one of the nozzles to its respective teat cup which could occur, in particular, if one of the teat cups should be dislodged accidentally from the teat of the animal being milked and thereby allowing an inflow of air at atmospheric pressure from the teat cup through the nozzle into the chamber which could force milk in the chamber to flow back through the other nozzles to the respective teat cups connected thereto.

European Patent Publication —A—O 031 246 discloses a milking machine including a claw for connecting teat cups to a milk line, the claw having a plurality of individual chambers each with the milk inlet leading from a teat cup into the chamber and an outlet leading from the chamber to a common chamber in the milkline. The outlets from the chamber extend parallel to one another into a common collection conduit. Although each chamber is so designed that a swirling or vortex action is imparted into the milk flowing in the chamber and reverse flow of milk back from the chamber to the teat cup cannot easily take place, the possibility of such reverse flow remains and cross-flow from one parallel stream exiting from one chamber conduit into the collection conduit back into another conduit could occur leading to a reverse flow from the chamber to its associated teat cup.

This invention provides a method of milking animals using a milking machine which method includes the steps of directing the fluid emanating from each teat cup of a cluster of teat cups into an individual chamber for that teat cup and directing fluid emanating from each of said individual chambers into a milk tube leading from the cluster of teat cups to a milk line of the milking machine in a manner such that the interchange of milk between said teat cups is obviated or minimised, as defined is claim 1.

By providing a swirling or vortex action in the flow of milk into the common chamber from the individual chambers, the possibility of a reverse flow of milk from the common chamber back into any of the individual chambers is minimised if not eliminated.

The invention also provides apparatus for use in a milking machine for milking animals, said apparatus comprising a claw body, a milk connection to said claw for each teat cup in a cluster of teat cups associated in use with said claw, each said milk connection leading to a common chamber having a common chamber outlet which in turn leads to a milk line, said common chamber being shaped and said milk connections being shaped and positioned so that a swirling or vortex action takes place in said common chamber such that flow of milk into said individual teat cups from said common chamber is substantially prevented wherein in that an individual chamber for each teat cup is mounted in said claw body so as to be interposed in use between that teat cup and said common chamber with an inlet and an outlet from each individual chamber being arranged and each individual chamber being shaped so that fluid entering any one of said individual chambers creates a swirling or vortex action therein such that re-entry of milk from said selected individual chambers to its associated teat cup is substantially prevented and the shape of said common chamber is such that said swirling or vortex action in said common chamber is accentuated when said fluid flow is augmented by a rapid inrush of air into said common chamber.

To those skilled in the art to which this invention relates, many changes in construction and widely differing embodiments and applications of the invention will suggest themselves without departing from the scope of the invention as defined in the appended claims. The disclosures and the descriptions herein are purely illustrative and it is not our intention to limit the scope of the invention by those disclosures and descriptions, and otherwise, than by the terms of the appended claims.

One preferred form of the invention and modifications therefore will now be described with reference to the accompanying drawings in which:

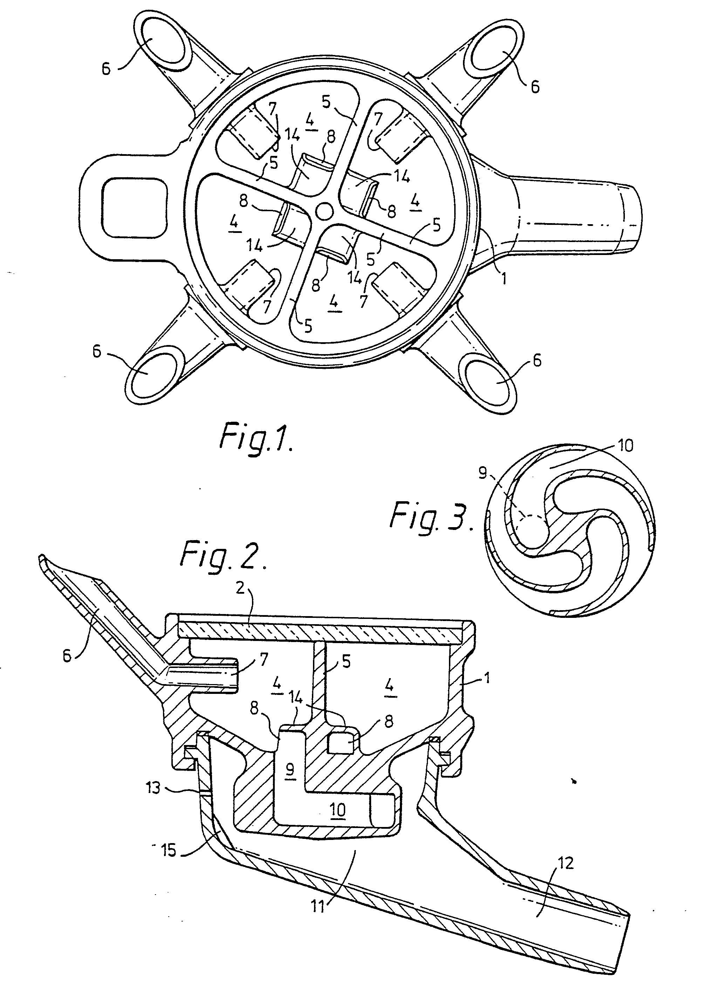

Figure 1 is a plan view of the body of a milking machine claw incorporating the invention,

Figure 2 is a typical cross section of the construction shown in figure 1, and

Figure 3 is a cross section on the line III—III, figure 2.

Referring to the drawings a milking claw for the use in a milking machine of known construction comprises a body 1 which is closed off on its upper surfaces by diaphragm (2) or gasket and cover (not shown).

The body 1 is divided into four equal individual chambers 4 by dividing walls 5. Milk inlets 6 are provided through which milk is introduced into the individual chambers from the inner cavities of four teat cups to which they are connected in use. The inlets 6 comprise short tubes 7, parts of each extending into and being positioned in an upper part of each of chambers 4 and directed in such a manner that fluid emerging into a chamber 4 from inlet 6 will tend to swirl around and form a vortex in chamber 4. The greater the inlet velocity of the fluid, the stronger the vortex that will be set up. Ideally each of chambers 4 is circular in cross section when viewed from the top and the inlet conduit 7 is flush with and tangential to the inner surface of chamber 4 to assist the formation of a fluid vortex. However if a body is moulded with four circular chambers 4 it is difficult if not impossible to maintain the uniformity of section or wall thickness necessary for good moulding particularly where one circular chamber is close to another chamber and if voids are moulded between the chambers to assist in regulating the section thickness of the body material those voids could present hygiene problems by forming bacteria traps or increasing cleaning difficulties. In practice it has been found that the quarter circle section shape of each of chamber 4 still permits fluid flow to form a vortex adequate for correct operation of the device as described herein.

Further, conduit 7 protrudes into chamber 4 to prevent or reduce milk backflow from chamber 4 through conduit 7 under static conditions as will be described later.

Milk and/or air passes through chamber 4 to orifice 8, through conduit 9 and spiral passage 10 into collector bowl 11 and out via port 12 which is connected by means of a flexible tube to the milk line which normally operates under a reduced pressure or "vacuum" of about −50kPa.

Milk flowing from each of the spiral passages 10 will be directed into bowl 11 at an acute angle to the inside surface of bowl 11 so that the milk from each of the four spiral passages 10 combines to flow in a circular manner around bowl 11 until it reaches outlet 12 from which it flows to the "milk line" aided by atmospheric air admitted to bowl 11 via orifice 13.

Under normal milking conditions milk will pass smoothly through the claw as heretofore described without unnecessary or excessive turbulence or agitation and with little if any risk of damage to fat particles in the milk.

If any one (or more) of the teat cups "slips", (admits air) or is dislodged from a teat, air will flow rapidly into that teat cup under atmospheric pressure.

This rapid influx of air will increase the rate of circular flow of the milk/air mixture in the relevant chamber 4 so that the milk remaining in that chamber 4 will move outwards under centrifugal force and be generally held to the outside of the vortex so formed.

Each orifice 8 through which fluid exits from one of the chambers 4 lies normal to the adjacent wall 5 and is an opening in an upstand 14 in a lower part of the partitions between the chambers 4. Each orifice 8 is facing "downstream" to the vortex so that fluid (air or milk) must change direction of flow to pass through orifice 8. This is relatively easy for air to do as it is of low density while the higher density of milk tends to prevent that milk from changing direction so readily.

Since there is usually only a small quantity of milk in chamber 4 at any time during milking and since the falling off of a teat cup prevents further supply of milk to chamber 4 this small quantity of milk may be retained in chamber 4 while the air influx condition is maintained.

Also under said air influx condition, air flowing through chamber 4 must exit from chamber 4 through orifice 8 conduit 9 and spiral passage 10 to combine with the "circular" milk flow in bowl 11. This air flow accelerates the milk flow in bowl 11 so that the milk will move outwards from the centre of bowl 11 under centrifugal force until it passes out through port 12 to the milk line.

Under these "vortex" conditions it is almost impossible for milk flowing rapidly in a circular path inside bowl 11 to move inwards or to reverse its direction of flow to enter any of the other spiral passages 10 and so flow back towards any of the other chambers 4 and teat cups.

Thus it will be seen that under the worst conditions when air is introduced to any teat cups, the vortex flows, induced by the air, effectively prevents milk or air passing from any one teat cup or chamber 4 to any other.

Even if a condition did arise under which air was caused to flow in a reverse direction into any of spiral passages 10 such air would enter chamber 4 through orifice 8 and passageway 9 leading to orifice 8 which has a position and direction which directs such air flow into chamber 4 in such a direction that it sets up a circular flow condition around chamber 4 so that any milk remaining in chamber 4 would move outwards against the inside surfaces of chamber 4 and the air would have to reverse direction of flow to exit via orifice 7 and flow towards the teat cup and teat connected thereto. Milk being of heavier density than air would not readily change direction and would thus be retained in chamber 4.

It will therefore be seen that under normal milking conditions milk will flow smoothly and without undue agitation or turbulence from the teats through the claw to the milk line but under adverse conditions which may arise when a teat cup in a cluster slips off a teat or when the teat cups are being placed on or removed from a cow an inrush of air under atmospheric pressure will not cause milk or milk droplets to flow back towards other tests on that animal.

Under static or non-milking conditions, during normal handling of a cluster a standard type of claw as is now widely used, milk may flow back from the "long milk tube" (the flexible pipe connecting the cluster to the milk line) into the claw and/or from the claw to the teat cups.

With the construction above described this is much less likely to happen.

If milk from the long milk tube should flow back into outlet 12, it must fill up bowl 11 until it reaches the invert level of spiral passage 10. This retains much of the possible quantity which may be stored in the long milk tube. If additional milk flows back into bowl 11 it will flow through each or any of passages 10 into chambers 4 wherein it must fill to the level of the lowest part of any tube 7 before it may flow towards a teat cup.

The claw is so proportioned that it has adequate capacity to contain the likely quantity of milk which may be in the order of 90ml. and to contain a satisfactory quantity even when the claw is tilted during manual manipulation.

The design of a claw so described has been shown to present few washing or cleaning problems with both "normal" or "reverse flow" washing systems. Cleaning of the bowl 11 is facilitated by providing one or more turbulence causing vanes 15 in the bowl 11.

**Claims**

1. A method of milking animals using a milking machine which method includes the steps of directing the fluid emanating from each teat cup of a cluster of teat cups into a common chamber (11) leading to a milk tube (12) leading from the cluster of teat cups to a milk line of the milking machine in a manner such that the interchange of milk between said teat cups is obviated or minimised by creating a swirling or vortex action in said common chamber (11) characterised in that said method includes the steps of directing the fluid from each teat cup into an individual chamber (4) for that teat cup and directing fluid emanating from each of said individual chambers into said common chamber (11) and of accentuating said swirling or vortex action when said flow of fluid to the milk line is augmented by a rapid inrush of air.

2. A method as claimed in claim 1 which includes the step of causing the flow of fluid in each said individual chamber (4) to give a swirling or vortex action such that milk already in the chamber cannot re-enter the fluid inlet from the teat cup to the chamber (11) without a marked change in direction.

3. Apparatus for use in a milking machine for milking animals, said apparatus comprising a claw body (1), a milk connection (6) to said claw for each teat cup in a cluster of teat cups associated in use with said claw, each said milk connection leading to a common chamber (11) having a common chamber outlet (12) which in turn leads to a milk line, said common chamber (11) being shaped and said milk connections being shaped and positioned so that a swirling or vortex action takes place in said common chamber (11) such that flow of milk into said individual teat cups from said common chamber (11) is substantially prevented characterised in that an individual chamber (4) for each teat cup is mounted in said claw body so as to be interposed in use between that teat cup and said common chamber (11) with an inlet (7) and an outlet (10) from each individual chamber (4) being arranged and each individual chamber (4) being shaped so that fluid entering any one of said individual chambers (4) creates a swirling or vortex action therein such that re-entry of milk from said selected individual chamber (4) to its associated teat cup is substantially prevented and the shape of said common chamber (11) is such that said swirling or vortex action in said common chamber (11) is accentuated when said fluid flow is augmented by a rapid inrush of air into said common chamber.

4. Apparatus as claimed in claim 3 wherein said connections (10) from said teat cups to said common chamber (11) are each shaped by being swept to increase radially then directed circumferentially to give said swirling or vortex action.

5. Apparatus as claimed in claim 4 wherein said connections (10) are substantially shaped to an involute or spiral curve.

6. Apparatus as claimed in any one of claims 3 to 5 wherein interrupting means (15) are appropriately positioned to cause turbulence in the flow of fluid to create a washing flow on adjacent walls of said connections.

7. Apparatus as claimed in claim 6 wherein said interrupting means comprise one or more vanes (15) positioned on outer surfaces of the walls of said common chamber (11).

8. Apparatus as claimed in any one of claims 3 to 7 wherein vanes (15) are provided within said common chamber (11) to create in use some turbulence in fluid flow therein.

**Revendications**

1. Un procédé de traite d'animaux utilisant une machine de traite, ledit procédé comprenant les étapes consistant à diriger le fluide provenant de chaque ventouse de traite faisant partie d'un ensemble de ventouses de traite jusque dans une chambre commune (11) débouchant dans un tube de lait (12) reliant l'ensemble de ventouses de traite à une canalisation de lait de la machine de traite d'une manière telle qu'un échange de lait entre lesdites ventouses de traite soit éliminé ou réduit au minimum par création d'un effet de turbulence ou de vortex dans ladite chambre commune (11), caractérisé en ce que ledit procédé comprend les étapes consistant à diriger le fluide provenant de chaque ventouse de traite vers une chambre individuelle (4) associée à cette ventouse et à diriger du fluide provenant de chacune desdites chambres individuelles jusque dans ladite chambre commune (11) et à accentuer ledit effet de turbulence ou de vortex quand ledit écoulement de fluide vers la canalisation de lait est augmenté par une pénétration rapide d'air.

2. Un procédé tel que revendiqué dans la revendication 1, qui comprend l'étape consistant à faire en sorte que l'écoulement de fluide dans chacune desdites chambres individuelles (4) produise un effet de turbulence ou de vortex tel que du lait se trouvant déjà dans la chambre ne puisse par repénétrer par l'entrée de fluide de la ventouse de traite dans ladite chambre (11) sans un changement marqué de direction.

3. Appareil utilisable dans une machine de traite pour traire des animaux, ledit appareil comprenant un corps de griffe (1), un raccord de transmission de lait (6) reliant la griffe à chaque ventouse de traite d'un ensemble de ventouses de traite associé en service à ladite griffe, chaque raccord de transmission de lait débouchant dans une chambre commune (11) comportant une sortie (12) qui débouche à son tour dans une canalisation de lait, ladite chambre commune (11) étant profilée, et lesdits raccords de transmission de lait étant profilés et positionnés, de telle sorte qu'un effet de turbulence ou de vortex se produise dans ladite chambre commune (11) afin qu'un écoulement de lait soit pratiquement empêché depuis lesdits ventouses individuelles jusqu'à ladite chambre commune (11), caractérisé en ce qu'une chambre individuelle (4) associée à chaque ventouse de traite est montée dans ledit corps de griffe de façon à être interposée, en service, entre cette ventouse de traite et ladite chambre commune (11), une entrée (7) et une sortie (10) de chaque chambre individuelle (4) étant disposées, et chaque chambre individuelle (4) étant profilée, de telle sorte que du fluide pénétrant dans l'une quelconque desdites chambres individuelles (4) crée un effet de turbulence ou de vortex dans celle-ci de manière qu'une repénétration de lait provenant de ladite chambre individuelle sélectionnée (4) dans sa ventouse de traite associée soit pratiquement empêchée, et ladite chambre commune (11) est profilée de telle sorte que ledit effet de turbulence ou de vortex dans ladite chambre commune (11) soit accentué quand ledit écoulement de fluide est augmenté par une pénétration rapide d'air dans ladite chambre commune.

4. Appareil tel que revendiqué dans la revendication 3, dans lequel lesdits raccords (10) reliant lesdites ventouses de traite à ladite chambre commune (11) sont chacun profilés de façon à produire une augmentation radiale d'écoulement avec orientation circonférentielle de façon à produire ledit effet de turbulence ou de vortex.

5. Appareil tel que revendiqué dans la revendication 4, caractérisé en ce que lesdits raccords (10) ont sensiblement la forme d'une développante ou d'une spirale.

6. Appareil tel que revendiqué dansd une quelconque des revendications 3 à 5, dans lequel des moyens d'interruption (15) sont positionnés de façon appropriée pour produire une turbulence dans l'écoulement de fluide afin de créer un écoulement de lavage sur des parois adjacentes desdits raccords.

7. Appareil tel que revendiqué dans la revendication 6, dans lequel lesdits moyens d'interruption comprennent une ou plusieurs aubes (15) positionnées sur les surfaces extérieure des parois de ladite chambre commune (11).

8. Appareil tel que revendiqué dans une quelconque des revendications 3 à 7, dans lequel des aubes (4) sont prévues à l'intérieur de ladite chambre commune (11) de façon à créer, en service, une certaine turbulence dans l'écoulement de fluide passant dans celle-ci.

**Patentansprüche**

1. Verfahren zum Melken von Tieren unter Verwendung einer Melkmaschine, wobei das Verfahren folgende Schritte umfaßt: Man führt die Flüssigkeit aus jedem Zitzenbecher eines Bündels von Zitzenbechern in eine gemeinsame Kammer (11), die zu einem Milchrohr (12) führt, das von dem Bündel von Zitzenbechern zu einer Milchleitung der Melkmaschine führt, und zwar derart, daß der Austausch von Milch zwischen den Zitzenbechern unterbunden oder minimiert wird, indem man eine kreisende oder wirbelnde Bewegung in der gemeinsamen Kammer (11) hervorruft, dadurch gekennzeichnet, daß das Verfahren folgende Schritte umfaßt: Man leitet die Flüssigkeit aus jedem Zitzenbecher in eine individuelle Kammer (4) für den Zitzenbecher und führt die Flüssigkeit aus jeder der individuellen Kammern in die gemeinsame Kammer (11), und man betont die kreisende oder wirbelnde Bewegung, wenn der Flüssigkeitsfluß zur Milchleitung durch schnellen Einstrom von Luft verstärkt wird.

2. Verfahren nach Anspruch 1, umfassend die Schritte: Man veranlaßt den Flüssigkeitsfluß in jeder individuellen Kammer (4) zu einer kreisenden oder wirbelnden Bewegung, so daß schon in der Kammer befindliche Milch nicht wieder in den Flüssigkeitseinlaß vom Zitzenbecher in die Kammer (11) eintreten kann, ohne dabei eine merkliche Richtungsänderung zu erfahren.

3. Vorrichtung zur Verwendung in einer Melkmaschine zum Melken von Tieren, wobei die Vorrichtung einen Klauenkörper (1), eine Milchverbindung (6) zum Klauenkörper von jedem Zitzenbecher eines Bündels von Zitzenbechern, welche beim Gebrauch mit dem Klauenkörper verbunden sind, umfaßt, wobei jede Milchverbindung zu einer gemeinsamen Kammer (11) führt, die einen gemeinsamen Kammerauslaß (12) aufweist, der wiederum zu einer Milchleitung führt, wobei die gemeinsame Kammer (11) und die Milchverbindungen derart geformt und positioniert sind, daß eine kreisende oder wirbelnde Bewegung in der gemeinsamen Kammer (11) derart stattfindet, daß ein Einfließen von Milch in die einzelnen Zitzenbecher aus der gemeinsamen Kammer (11) im wesentlichen verhindert ist, dadurch gekennzeichnet, daß eine individuelle Kammer (4) für jeden Zitzenbecher am Klauenkörper derart angebracht ist, daß sie beim Gebrauch zwischen dem Zitzenbecher und der gemeinsamen Kammer (11) liegt, wobei ein Einlaß (7) und ein Auslaß (10) von einer jeden individuellen Kammer (4) so angeordnet und jede individuelle Kammer (4) so geformt ist, daß Flüssigkeit, welche in eine der individuellen Kammern (4) eintritt, in dieser eine kreisende oder wirbelnde Bewegung derart verursacht, daß der Rückfluß von Milch aus der jeweiligen individuellen Kammer (4) zum zugeordneten Zitzenbecher im wesentlichen verhindert wird, und daß die Form der gemeinsamen Kammer (11) derart ist, daß die kreisende oder wirbelnde Bewegung in der gemeinsamen Kammer (11) betont wird, wenn der Flüssigkeitsfluß durch schnellen Einstrom von Luft in die gemeinsame Kammer verstärkt wird.

4. Vorrichtung nach Anspruch 3, worin die Verbindungen (10) von den Zitzenbechern zur gemeinsamen Kammer (11) jeweils mittels Krümmung so geformt sind, daß sie zuerst radial und dann in Umfangsrichtung gerichtet sind, um die kreisende oder wirbelnde Bewegung hervorzurufen.

5. Vorrichtung nach Anspruch 4, worin die Verbindungen (10) im wesentlichen in einer involuten oder spiraligen Kurve geformt sind.

6. Vorrichtung nach einem der Ansprüche 3 bis 5, worin Unterbrechungsmittel (15) in geeigneter Weise positioniert sind, um eine Turbulenz im Flüssigkeitsfluß zu erzeugen, um einen Spülfluß auf den angrenzenden Wänden der Verbindungen hervorzurufen.

7. Vorrichtung nach Anspruch 6, worin die Unterbrechungsmittel eine oder mehr Rippen (15) umfassen, welche an äußeren Flächen der Wände der gemeinsamen Kammer (11) positioniert sind.

8. Vorrichtung nach einem der Ansprüche 3 bis 7, worin Rippen (15) in der gemeinsamen Kammer (11) vorgesehen sind, um beim Gebrauch eine Turbulenz im Flüssigkeitsstrom hervorzurufen.

Fig.1.

Fig. 3.

Fig. 2.